# EUROPEAN PATENT SPECIFICATION

(11) **EP 2 255 473 B1**
(45) Date of publication and mention of the grant of the patent: **24.12.2014**
(21) Application number: 09716431.3
(22) Date of filing: 02.03.2009
(51) Int. Cl.: H04L 1/00, H04L 25/03, H04L 27/34

(54) **A LAYERED RECEIVER STRUCTURE**
GESCHICHTETE EMPFÄNGERSTRUKTUR
STRUCTURE DE RÉCEPTEUR EN COUCHES

(30) Priority: 03.03.2008 US 33120; 15.12.2008 US 335405
(43) Date of publication of application: 01.12.2010
(73) Proprietor: NTT DoCoMo, Inc., Chiyoda-Ku Tokyo 100-6150 (JP)
(72) Inventor: RAMPRASHAD, Sean, A., Los Altos CA 94024 (US); SUNDBERG, Carl-Erik, W., Sunnyvale CA 94085 (US)
(74) Representative: Manley, Nicholas Michael
(86) International application number: PCT/US2009/035738
(87) International publication number: WO 2009/111402

(56) References cited:
- US-A1- 2005 068 918
- US-A1- 2006 140 302
- RAMPRASHAD S A ET AL: "Hierarchical QAM BICM MIMO systems with iterative decoding and applications to media broadcast" WORLD OF WIRELESS, MOBILE AND MULTIMEDIA NETWORKS, 2008. WOWMOM 2008. 2008 INTERNATIONAL SYMPOSIUM ON A, IEEE, PISCATAWAY, NJ, USA, 23 June 2008 (2008-06-23), pages 1-9, XP031302756 ISBN: 978-1-4244-2099-5
- YUJIN NOH ET AL: "Design of Unequal Error Protection for MIMO-OFDM Systems" VEHICULAR TECHNOLOGY CONFERENCE, 2005. VTC 2005-SPRING. 2005 IEEE 61ST, IEEE, PISCATAWAY, NJ, USA, vol. 2, 30 May 2005 (2005-05-30), pages 1058-1062, XP010855571 ISBN: 978-0-7803-8887-1
- NUNO SOUTO ET AL: "Iterative Decoding and Channel Estimation of MIMO-OFDM Transmissions with Hierarchical Constellations and Implicit Pilots" SIGNAL PROCESSING AND COMMUNICATIONS, 2007. ICSPC 2007. IEEE INTERNATIONAL CONFERENCE ON, IEEE, PISCATAWAY, NJ, USA, 24 November 2007 (2007-11-24), pages 428-431, XP031380551 ISBN: 978-1-4244-1235-8

## Description

### FIELD OF THE INVENTION

Embodiments of the present invention relate to the field of receiver structures for receiving information over wireless systems with one or multiple transmit antennas and, one or multiple receive antennas; more particularly, embodiments of the present invention relate to the case where information is transmitted from antennas in a multi-layered format, a receiver in a wireless communication system receives a signal that is sent over multiple transmit antennas and decodes the information layers using a multistage decoder that performs iterative decoding.

### BACKGROUND OF THE INVENTION

Future wireless systems require a more effective utilization of the radio frequency spectrum in order to increase the data rate achievable within a given transmission bandwidth. This can be accomplished by employing multiple transmit (input) and multiple receive (output) antennas combined with signal processing. These systems are termed multiple-input multiple-output (MIMO) systems.

A number of recently developed techniques and emerging standards are based on employing MIMO. However, one of the main challenges in deploying such systems is the exponential increase in decoding (receiver) complexity with the number of antennas. Also of interest, in particular to media delivery, are systems with inherent unequal error protection properties.

The concept of a layered transmission system based on the combined use of hierarchical constellations and multiple coders has been used in single-input single-output systems, such as the broadcast MediaFLO system. This MediaFLO system is a Single-Input Single-Output (SISO) system. In the system, two layers of information are transmitted using the same time and frequency resources. The first layer, "layer 1", also referred to as the "base" or "core" layer, is used to send high-priority information. The second layer, "layer 2", also referred to as the "enhancement" layer, is used to send information of less priority than the layer 1. The transmission system is designed so that layer 1 can be received with greater robustness than layer 2, for example with less losses and/or at lower received signal to noise ratio than layer 2. Benefits of such a layered system to media delivery in terms of delivered media quality and coverage area are understood to those skilled in the art.

Layered transmission can also be used to deliver information for which layers require the same robustness or quality of service in delivery. In such systems, the layers can be adjusted to have (approximately) the same delivery characteristics. The benefits of layered transmission in such cases can be in terms of the simplified decoding and receiver structures allowed by the layered transmission format.

Multi-layer MIMO schemes are known in the art. While the transmission systems are well specified, receiver architectures for these MIMO, and SISO, systems are still being developed. Specifically present receiver schemes for MIMO are not iterative, and the design of iterative receivers is non-trivial given complexity considerations and given the intricacy involved in joint dependencies and in exchanging information between layers during the decoding process.

One such non-iterative, multi-layer MIMO scheme uses a simple Minimum Mean Square Error (MMSE) decoder to make a low complexity MMSE estimate of layer 1. It then uses these (rather noisy) estimates to create "hard" (fixed) layer 1 bit estimates that are then used to do maximum likelihood decoding of layer 2. Here layer 2 is decoding assuming that layer 1 is known. This is not a very efficient coding scheme for delivering high rates and high spectral efficiencies. Specifically, such a scheme appears to mainly applicable for use with lower rates using lower outer code rates wherein the very noisy layer 1 estimates, and the errors such estimates propagate into the layer 2 decoding, can be corrected by a powerful outer code. In addition, the scheme severely limits the performance of the decoding of layer 1 since it is decoded with little or no knowledge or layer 2.

Patent document US 2006/0140 302 discloses iterative demodulation and decoding of multi-level coded signals.

### SUMMARY OF THE INVENTION

In accordance with a first aspect of the present invention, there is a receiver for use in a wireless communication system that transmits multi-level coded data with a layered transmitter, wherein the receiver performs an iterative decoding scheme for the each of two or more information layers, the receiver comprising a layer 1 demapper and a layer 1 outer decoder to iteratively decode layer 1 of the coded data, and a layer 2 demapper and a layer 2 outer decoder to iteratively decode layer 2 of the coded data, wherein
the layer 1 demapper generates a layer 1 set of likelihood estimates only for bits of the first information layer of received signal data in each of one or more iterations and where the layer 1 set of likelihood estimates are generated in response to the received signal data and, in at least one of the one or more iterations, also in response to one or more of the likelihood estimates generated by the outer decoders in decoding schemes for at least one layer other than layer 1;
the layer 1 outer decoder updates the layer 1 likelihood estimates from the layer 1 demapper and feedbacks the updated layer 1 likelihood estimates to the layer 1 demapper for use in another iteration of iterative decoding;
the layer 2 demapper generates a layer 2 set of likelihood estimates only for information bits of the layer 2 of received signal data in each of one or more iterations, and where the layer 2 set of likelihood estimates are generated in response to the received signal data and, in at least one of the one or more iterations, also in response to one or more of the likelihood estimates generated by the outer decoders in decoding schemes for at least one layer other than layer 2; and
the layer 2 outer decoder updates the layer 2 likelihood estimates from the layer 2 demapper and feedbacks the updated layer 2 likelihood estimates to one or both of the layer 2 demapper for use in another iteration of iterative decoding and to the layer 1 demapper to enable the layer 1 demapper to improve decoding of layer 1 coded data using layer 2 information.

In accordance with a second aspect of the present invention, there is a method for receiving and iteratively decoding multi-level coded data comprising a first and second information layers, the method comprising:
generating a first set of likelihood estimates only for bits of the first layer of received signal data in one or more iterations using a first demapper, in response to, the received signal and, in at least one iteration, also in response to likelihood information from an outer decoder from another layer;
updating the first set of likelihood estimates and feeding back the updated first set of likelihood estimates to the first demapper, using a first outer decoder, for another iteration of iterative decoding;
generating, using a second demapper, different than the first demapper, a second set of likelihood estimates only for bits in the second layer of received signal data in one or more iterations on the second layer, the second set of likelihood estimates being generated in response to the received signal data and, in at least one of the one or more iterations, the updated first set of likelihood estimates generated by the first outer decoder in at least one of the one or more iterations on the first layer; and
updating the second set of likelihood estimates and feeding back the updated second set of likelihood estimates to one of the second demapper or the first demapper, using a second outer decoder, for another iteration of iterative decoding, the updated second set of likelihood estimates being used by the first demapper to improve decoding of the first layer.

### BRIEF DESCRIPTON OF THE DRAWINGS

The present invention will be understood more fully from the detailed description given below and from the accompanying drawings of various embodiments of the invention, which, however, should not be taken to limit the invention to the specific embodiments, but are for explanation and understanding only.
**Figure 1** is a block diagram of a transmitter structure for a layered BICM MIMO/OFDM system.
**Figure 2** is a block diagram of the radio front end and channel state information estimation at the receiver.
**Figure 3** is a block diagram of a general embodiment of the invention of a receiver structure wherein demappers can iterate with their respective outer decoders as well as optionally and as needed pass update likelihood information between outer decoders of one layer and demappers of other layers.
**Figure 4** illustrates one embodiment of a non-hierarchical 16QAM constellation.
**Figure 5** illustrates one embodiment of a set partition type mapper for uniform 16QAM which can be used in the system of Figure 1.
**Figure 6** illustrates one embodiment of a set partition type mapper for non-uniform 16QAM which is a refinement of the mapper in Figure 5 in which the relative energy represented by the most significant two bits relative to the least significant two bits is adjusted.

### DETAILED DESCRIPTION OF THE PRESENT INVENTION

A novel iterative layered decoding (receiver) structure and method particularly well suited for multi-layer MIMO transmission are disclosed. In one embodiment, the scheme comprises of a number of iterative decoding schemes for each information layer, and such schemes operate iterating both independently and dependently, as required. The flexible structure is enabled by being able to compute efficiently "soft" likelihood information and by passing such likelihood information between an outer decoder focused on one information layer to the demapper focused on another information layer. Doing so reduces the estimation errors and noise passed between and seen by the decoding scheme of each layer, thus improving decoding performance and supporting high transmission rates.

Embodiments of the present invention include reduced complexity iterative receiver structures for receiving layered information over wireless communication systems with one or multiple transmit antennas and one or multiple receive antennas. Such receivers may be part of a mobile terminal in the wireless system. One embodiment of the invention deals primarily with the forward link, i.e., the base station-to-mobile transmission direction of transmission, and more specifically reduced complexity iterative receiver structures and/or unequal error protection schemes for mobiles in these systems. However, embodiments of the invention can also apply to the reverse link in scenarios where lowering complexity at the base-station and/or unequal error protection in reverse link streams is desirable.

In one embodiment, the receiver structure receives a signal carrying information in a layered format that is sent over multiple transmit antennas. These transmit antennas may be distributed over multiple base stations (i.e., they are not collocated). In one system embodiment, the transmit antennas are collocated at the same base station. The location of the transmit antennas is not central to the embodiment once appropriate considerations for timing delays in reception are accounted for, for example in the design of the cyclic prefix length in an OFDM system. When combined with signal processing, multiple transmit and receive antennas can yield communication links with increased bandwidth efficiency (data rate), extended power efficiency (range), or both.

In one embodiment, the wireless communication system employs wideband transmission with orthogonal frequency division multiplexing (OFDM), divides the information streams into a number of information layers, and uses a number of outer channel codes, one for each layer. Iterative decoding (ID) is used for detection efficiency. The system may provide, by appropriate choice of the relative sizes of information layers and rates of each outer code, flexible unequal error protection between the information layers.

In one embodiment, the wireless communication system employs wideband transmission with orthogonal frequency division multiplexing (OFDM), divides the information streams into a number of information layers, and uses a number of outer binary channel codes, one for each layer. In one embodiment, bit-interleaved coded modulation (BICM) is used with these binary codes for transmission efficiency, and iterative decoding (ID) is used for detection efficiency. In one embodiment, there is no inner space-time block code in the system, just a MIMO/OFDM system. The system may provide, by appropriate choice of the relative sizes of layers and rates of each outer code, flexible unequal error protection between the information layers.

In one embodiment, particularly for high rate systems or systems with a large number of transmit antennas, either of which may use large QAM constellations, the wireless communication system divides the information streams into a number of information layers, and uses a number of outer channel codes, one for each layer. The system does not necessarily only target unequal error protection, but iterative multi-stage decoding is used also for the detection efficiency where to reduce complexity of the demapping operation, layered (hierarchical) modulation with multilevel coding with multiple binary outer encoders and companion binary interleavers are exploited.

In the mentioned embodiments, the decoding is done by use of multistage decoding where the component decoders can consist of MAP, MaxlogMAP, adaptive Soft Output "M" Algorithm (SOMA) in various combinations and the outer decoders match the outer binary or non-binary encoders. This decoding generates soft output for use with iterative multistage decoding. The multilevel coding and multistage decoding structure achieve both reduced receiver complexity and either equal error protection or unequal error protection among layers.

In one embodiment, particularly for high rate systems with a large number of transmit antennas and large QAM constellations the iterations in decoding each layer are allowed to occur both independently within layers, and as needed dependently between layers. The dependence between layers is implemented by passing soft information about one layer to the components decoding another layer. For example, the layer 1 iterative decoder uses soft information about layer 2 to improve its decoding of layer 1. The layer 2 iterative decoder uses soft information about layer 1 to improve its decoding of layer 2. Each decoder for each layer can iterate further improving estimates of its own layers. Improved estimates can then be passed as needed between the decoders to further improve estimates. In one embodiment, the passing of such information, and the iterations both within and between layers, is flexible, and can be adjusted to meet the complexity decoding performance needs of the system.

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

### Overview

Methods and apparatuses are disclosed for adaptive reduced complexity iterative receiver structures applicable to multi-level transmission in a wireless communication system. In one embodiment, the communication system uses OFDM for wideband transmission, MIMO and large QAM constellations for high spectral efficiency, bit interleavers for the bit-interleaved coded modulation scheme (BICM) with hierarchical QAM constellations, and outer binary codes.

In one embodiment, the receiver structure has a MIMO detector that performs detection iteratively by passing soft (likelihood) information about information bits. Thus, both the inner MIMO layered demappers and the outer decoders perform soft in soft out (SISO) detection/decoding. In one embodiment, the binary outer code could be, for example, a turbo code, a regular convolutional code, an RCPC code, or an LDPC code. The teachings herein are applicable to any type of selected binary codes and code rates.

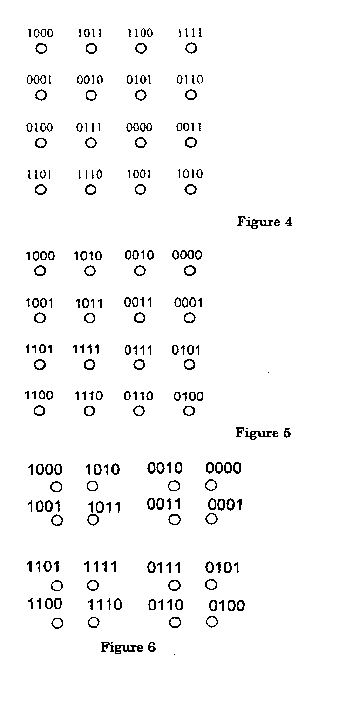

In one embodiment, the receiver structure has a soft output MIMO detector that includes joint demappers. In one embodiment, the inner joint demappers are adaptive Soft Output M-Algorithms (SOMAs). That is, the soft output MIMO detector in the receiver makes adaptive use of a modified soft output M-algorithm (SOMA). The soft output MIMO detector is applied for every tone or subchannel in the OFDM system as well as at every iteration in the decoding. As in classic "M" Algorithm demappers, the SOMA detector (demapper) only considers a (good, carefully selected) fraction of the total number of candidates in its MIMO detection (demapping/likelihood-calculation) process, thus considerable complexity reduction can be achieved. Unlike classic "M" Algorithms, the SOMA can provide and efficient and accurate estimate of Soft Information for each bit and/or symbol it handles. In one embodiment, for the layered case, the total number of bits in the signal constellation is subdivided arbitrarily in the parallel streams. For example, with 64-QAM with 6 bits per coded signal (symbol) point, the coded bit stream is divided into two groups with 3 bits in each or, for example, in three groups with 2 bits in each or, for example, in two groups with 2 and 4 bits respectively or with 4 and 2 bits respectively. There is, of course, a tradeoff between the bit-error rate and signal-to-noise ratio performance and the degree of complexity reduction for each such cases. Performance is also influenced by the outer code rate which is applied to each information layer, each information layer being coded to produce a given coded layer. Later examples are given in Figures 5 and 6 for the case of 4 bits (over a 16-QAM constellation) that can be divided into two subsets of 2 bits each (in essence, a main QPSK constellation where each symbol is expanded by an additive secondary QPSK constellation).

In an alternative embodiment, inner joint demappers (or at least some of them) are simpler MMSE decoders or even more advanced MaxlogMAP units at various stages or iterations. For the remainder of the description, the embodiments will be described as if all component decoders are adaptive SOMAs unless explicated state otherwise. Other possible demappers can be used in cases where the decoding scheme for a particular layer may, while needing to send soft information to other layers, benefit from a non-SOMA design. For example, if a very low rate outer code (e.g., a rate ½ or lower) is used for a specific layer, complexity reduction may be achieved for that layer with MMSE decoders.

In one embodiment, the SOMA in each layer is used adaptively, and with consideration of the function in the layered decoding operation. The number of candidates explored in each of the SOMA modules is controlled in one case by the parameter M, the number of paths that are extended from each node or level in the detection tree. It is also somewhat affected by the number of early-terminated paths in the tree since these play a role in the soft output calculations. This value is denoted T and is used in the soft output value calculation by the algorithm. In the overall detection process, the number of iterations, I, is also affecting the total decoding complexity and the associated performance.

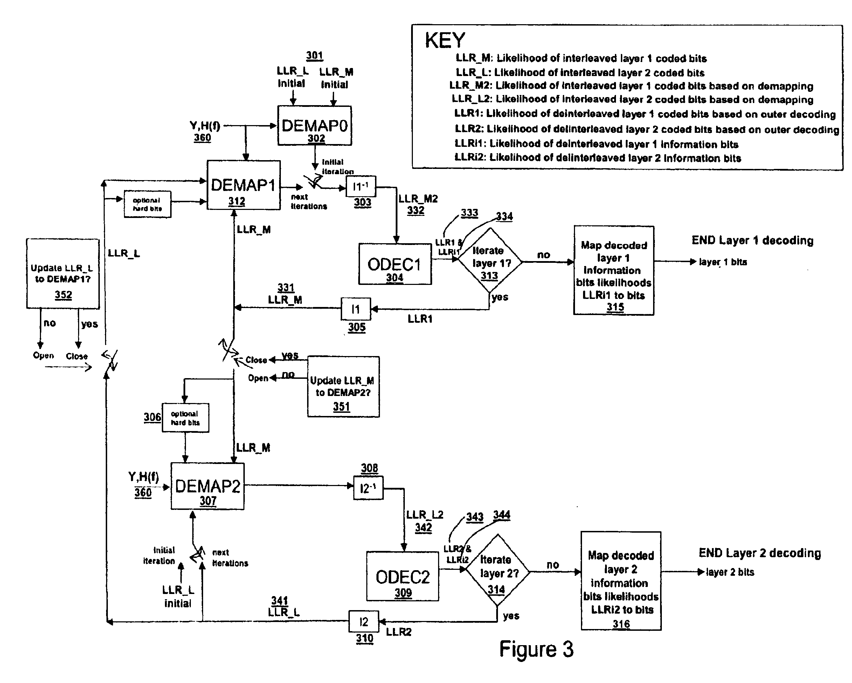

Note, iterations can occur within a layer independently of updates from others layer. For example, the SOMA module for layer 1 (denoted DEMAP1 in Figure 3) can iterate between its outer decoder (denoted ODEC1 in Figure 3) even without updates to the soft information (LLR_L 341 in Figure 3) from layer 2. Similar flexibility is allowed for in the decoding of layer 2. Independent iterations allow each layer to potentially improve the reliability of soft information it produces before passing such information to other layers.

Iterations can also occur dependently between layers, and for high rate transmission systems (e.g., MIMO 4x4 and higher, modem 16QAM and higher, and an outer code of rate ¾ or higher), it is critical that information is passed between layers at one or more instances in a decoding process. For example, an iteration for layer 1 can be made to occur after a each update of likelihood information of layer 2 (LLR_L) is available from the decoding (after DEMAP2 and ODEC2 processes) of layer 2. For example, an iteration for layer 1 can be made to occur after a set number of iterations (updates) of likelihood information of layer 2 (LLR_L) as available from a set number of iterations in decoding (after a set number of DEMAP2 and ODEC2 processes) of layer 2. Similar flexibility is allowed for in the decoding of layer 2. Dependent iterations are important for layered decoding since it allows one layer to benefit from improvements in the reliability of soft information from other layers. Often, the lack of reliability of one layer can harm the decoding of other layers. This is true for non-iterative schemes where (if at all) only layer 1 sends information to layer 2 once in the decoding process.

During every iteration in an OFDM system, and for every tone, SOMA detection is performed. In this invention the parameters M and T and/or I are optionally selected adaptively for the best overall performance for a given total complexity level, and as may be required for a dependent or independent iteration. The quantity that guides the adaptively is the quality of the different OFDM tones. A high signal level or alternatively a large signal to noise ratio SNR for a certain tone means a good quality level for that tone. For this case it is sufficient to decode with a lower value of M, a lower value of T and potentially a lower value of I. On the other hand, for a tone of poor quality, i.e. a tone with low signal level or low SNR, there is a need for higher values of M, T and I for the best use of the overall complexity. The adaptively may also be extended over time, i.e. over successive OFDM symbols. Yet another optional SOMA adaptively is over tree symbol positions by reordering the symbols based on received signal energy. The symbol with the highest signal energy is placed at the root of the SOMA tree and the others are ordered according to falling signal energy.

In one embodiment, the SOMA algorithm is enhanced for cases of hierarchical constellations by having its operation focus on creating likelihood estimates on only a subset (e.g., layer 1) of the entire bitstream. For example, if the full (hierarchical) constellation is 16-QAM, with layer 1 being the 2 MSBs and layer 2 being the 2 LSBs, for a given 16-QAM symbol fixing the two layer 2 bits implies the 2 MSBs come from one of four 16-QAM constellation points. Therefore, there are only 4 possible decisions in "demapping" this constellation, not 16 as in the full joint demapping. Thus, for example, the demapper DEMAP1 in Figure 3 can be simplified to focus only on these possible decisions. Similar simplifications can be applied to DEMAP2.

In one embodiment, to simplify the SOMAs for multi-stage operation, for creating likelihood estimates on only on a subset (e.g. layer 1) of the entire bitstream, the SOMA is operated by fixing the likelihood of bits from the other subset (e.g. layer 2). For example, DEMAP1 can be simplified by fixing the assumed likelihood of bits represented by layer 2 when decoding layer 1. If one fixes the likelihood of the 2 LSBs for a given symbol of 4 bits, then as before only 4 possible choices of MSBs have to be made, each likelihood being dependent on four terms with likelihoods as defined by the likelihoods of the LSBs. Therefore, while there are 16 constellation points, one can consider for this system a simplified system which considers each possible MSB choice by averaging for each over the four possible LSB choices. In essence, the system is averaging over the four groups of four options to create what is implicitly four options at each layer in the SOMA tree. This greatly reduces the complexity of the SOMA tree, and the SOMA tree search. Similar simplifications can apply to DEMAP2 and other demappers in systems with more than two layers.

In another embodiment, to further simplify the SOMA for multi-stage operation, the SOMA is operated on the reduced (implicit) constellations. This enhancement is achieved by assuming not likelihoods on bits, but fixed bit values in various layers when generating SOMA output for other layers. In this embodiment, some bit options in the SOMA tree search are ignored, thereby collapsing some of the search space (branches in the tree in the SOMA search). For example, such reduced constellations for layer 1 can be defined by fixing (one or more) the bit values for each bit on layer 2. If one fixes the value of the 2 LSBs for a given symbol of 4 bits, then as before only 4 possible choices of MSBs have to be made. Therefore while there are 16 constellation points, only four points are of interest given the fixed values assumed in the LSBs. The calculation of the likelihoods on the MSBs, as well as the tree search, is greatly simplified in DEMAP1. Similar simplifications can apply to DEMAP2 and other demappers in systems with more than two layers.

In one embodiment, unequal error protection or equal error protection on the various layers is achieved by selecting the hierarchical constellation (which can determine among other things the relative signal and interference energies seen on each layer), the outer code rates, the SOMA parameters, etc. For example, layer 1 will in general in a hierarchical system be decoded initially with little knowledge of the layer 2 bit values. In this way layer 2 appears as interference on layer 1. Figure 5 provides an example of such a constellation, where the full constellation is uniform. Figure 6 provides an example of such a constellation, where the full constellation is non-uniform reflecting an adjustment relative to Figure 5 of the relative signal energies and interferences seen by layers. These relative energies, and the code rates on each layer, determine the relative performance of each layer in terms of bit-error rate as a function of the received signal signal-to-noise ratio. Various combinations can provide better performance on layer 1. Other combinations may provide nearly equal performance on layers.

### An Example of a Transmitter

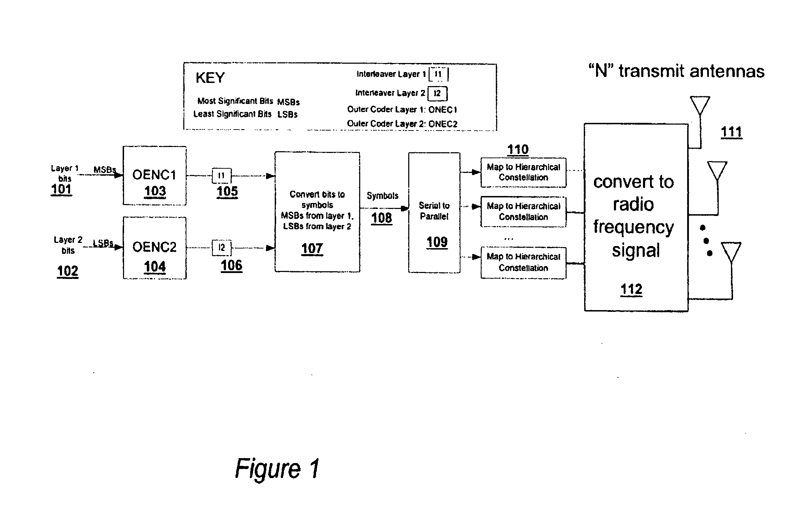

Figure 1 is a block diagram of a transmitter structure for the layered BICM MIMO/OFDM system which applies to the receivers specified herein. Referring to Figure 1, the input bit stream is partitioned into at least 2 parallel input streams referred to as layer 1 bits 101 and layer 2 bits 102. In one embodiment, layer 1 bits 101 are the core bits, while layer 2 bits 102 are the enhancement bits. For example, in a layered broadcast scheme, the layer 1 bits by themselves would produce acceptable, though reduced, quality video, while the addition of the layer 2 bits would produce a high-quality video when combined with layer 1. Thus the system is robust in the sense that video can be produced even when layer 2 is lost. In another embodiment, the input bit stream is partitioned into 3 or more, parallel input streams.

The partitioned input streams are individually encoded by different binary encoders. That is, outer coder 103 performs binary encoding on layer 1 bits 101 and outer coder 104 performs binary encoding on layer 2 bits 102, thereby producing two coded streams. The different binary encoders may include, for example, convolutional codes, LDPC codes, turbo codes, etc.

Each coded stream is interleaved in a binary interleaver. That is, interleaver 105 performs interleaving on the coded stream output from outer encoder 103 and interleaver 106 performs interleaving on the coded stream output from outer encoder 104.

After interleaving, the bitstreams are mapped jointly to a QAM symbol in a hierarchical constellation by coder 107. Coder 107 maps bits to symbols 108 where the most significant bits (MSBs) correspond to layer 1 and the least significant bits (LSBs) correspond to layer 2. This is often referred to as multilevel coding. Figure 4 illustrates a non-hierarchical 16-QAM constellation which generally does not apply to such a mapping. Figures 5 and 6 do show examples of hierarchical constellations that do apply. Specifically, each of Figures 5 and 6 shows a 16-QAM structure were the two MSBs implicitly map to a quadrant, i.e. a group of 4 of the 16-QAM points. Given the MSBs, the LSBs map to different points within each quadrant in a manner well-known in the art.

Symbols 108 are then transmitted over a MIMO/OFDM based system. Specifically, the OFDM operation comes as mappers 110 map the data to hierarchical constellation values, which are converted to radio frequency signals by RF converter 112. The signals are then transmitted through antennas 111 in a manner well-known in the art. Other transmission methods may be used.

### Examples of Receivers

Embodiments of iterative receivers that apply to layered transmission systems are described herein. At the receiver, the inner decoding is performed in stages with a multistage decoder. In one embodiment, in a MIMO/BICM/OFDM scheme, the joint demapper is layered with successive multistage soft output decoding, where the stages of inner decoding corresponds to each group of bits in the multilevel coding scheme.

For a prior art, single layer scheme, with a single (outer) binary encoder and a non-hierarchical constellation, decoding can begin by a single demapping operation which provides likelihood estimates on each and all of the received bits. This likelihood is used by the (outer) binary decoder, after deinterleaving if necessary, to refine the likelihood values. These values can then be used to make decisions on the bits, or can be used to feed back into the demapping operation for improved likelihoods for the outer binary decoder. The process can be iterated, and ends with a final soft information decision (which can be used to map to hard - 0 or 1 - bit values) on all bit values.

In one embodiment, the demapping operation, one of the main complexities in decoding, and updating of likelihoods, is performed in a multi-stage fashion exploiting cases where multilevel coding is used in transmission. The multistage demapping is enabled by a layered transmission system that uses multiple (multi-layered) outer binary coders and further separates coded bits, and thus demapping operation, from these outer binary coders by using hierarchical constellations. Each demapping operation can be tuned individually and also at various stages to provide good performance complexity tradeoffs. In one embodiment, the demapper itself is a modified version to handle the multi-stage decoding, by alternating updates on likelihoods between the multiple outer decoding operations.

In one embodiment, a receiver for use in a wireless communication system that transmits multi-level coded data, having first and second layers (and possibly more layers), with a layered BICM transmitter. The receiver comprises a first SOMA demapper to generate a first set of likelihood estimates only for bits of the first layer of received signal data, a first outer decoder to update the first set of likelihood estimates and feedback the updated first set of likelihood estimates to the first SOMA demapper for another iteration of iterative decoding and at least one other SOMA demapper, a second SOMA demapper to generate a second set of likelihood estimates only for bits in the second layer of received signal data, and a second outer decoder to update the second set of likelihood estimates and feedback the updated second set of likelihood estimates to the second SOMA demapper and at least one other SOMA demapper for another iteration of iterative decoding.

In one embodiment of a two layer system, the first layer comprises the most significant bits and the second layer comprises the least significant bits. In another embodiment, the first information layer (to be coded by the first outer encoder) comprises the core, most error sensitive, bits of a media and the second information layer (to be coded by the second outer encoder) comprises enhancement, less error sensitive, bits of a media, wherein the core bits are able to be received at a lower signal-to-noise ratio than the enhancement bits.

In one embodiment, the first SOMA demapper and the first outer decoder update the likelihoods of the first layer and the second SOMA demapper and the second outer decoder update the likelihoods of the second layer in a dependent fashion at alternating times during a decoding time period. In one embodiment, to start the process, the first SOMA demapper performs a joint demapping operation by setting each layer 2 bit to have equal likelihood of being 0 or 1 and/or the second SOMA demapper performs a joint demapping operation by setting each layer 1 bit to have equal likelihood of being 0 or 1. When one demapper and outer decoding pair has updated its respective likelihood estimates, the estimates are passed to the other demapper which uses such estimates, and possibly past estimates of its respective bits, to update the likelihood estimates of its respective bits. These updated estimates are then used with the respective outer decoder to provide further improved likelihood estimates.

In one embodiment, iterative decoding on each layer can occur independently or semi-independently where iterations on the first and second layers only continues for one of the first and second layers after a given time, or simultaneously on both layers without exchanging any likelihood information. In one embodiment, the first outer decoder does not operate after the given time if iterative decoding on the first layer terminates. If iterative decoding on the first layer terminates the second demapper may continue to perform iterative decoding using either hard bits or soft bits generated from the last operation of the first outer decoder. In another embodiment, the second outer decoder does not operate after the given time if iterative decoding on the second layer terminates, and further wherein the at least one other demapper (for other layers, including the first) may continue to perform iterative decoding using hard or soft bits generated based on the last operation from the second outer decoder.

In one embodiment, the other demapper comprises the first demapper. In another embodiment, the other demapper comprises a third demapper that is operable to generate a third set of likelihood estimates only for bits of the first layer and send the third set of likelihood estimates to the first outer decoder for updating as part of an iterative decoding process.

In one embodiment, the receiver also includes a first deinterleaver to perform interleaving on likelihood estimates generated by the at least one other demapper, a second deinterleaver to perform interleaving on likelihood estimates generated by the second demapper, and a mapper to map deinterleaved likelihoods estimates from the first and second deinterleavers to bits.

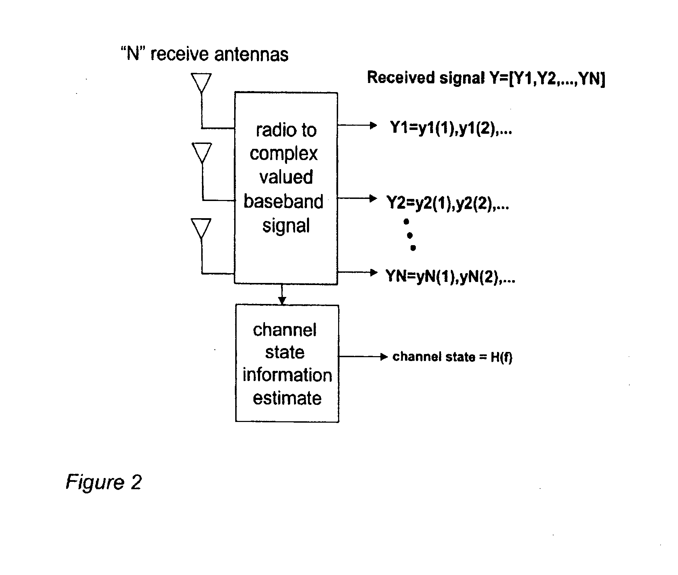

Figure 2 is a block diagram of one embodiment of a receiver front end that performs the mapping of radio signals to complex value base band signals and the acquisition of the channel state estimate information. Referring to Figure 2, N receive antennas 201 acquire wirelessly transmitted signals which are converted by converter 202 to sampled complex valued base band signals, which are output from the receiver front end. Specifically, the received signal is a vector of signals Y=[Y1, Y2, ... YN], where Y1=y1(1), y1(2),... etc; Y2=y2(1), y2(2),... etc, .. , YN=yN(1), yN(2), ... etc., which are themselves vectors of complex samples. Also, converter 202 provides channel state information estimate 203 as an output. These functions performed by the receiver front end are well known to those skilled in the art.

In one embodiment, the receiver front end is used in an OFDM system, and consists of Fast Fourier Transform operations, Cyclic Prefix Removal, and a demodulation of the signal to base-band. Channel state information estimation would be facilitated by pilot signals. This, and details of other front ends would be well-known to those skilled in the art.

The outputs of the receiver front end are inputs to the decoding structure described herein.

Once the radio signals have been converted into complex valued baseband signals, they are decoded to produce (estimates) of the original information bits. The process for the decoding two layers, though the description generalizes to 3 or more layers, follows and is described in conjunction with Figure 3. Figure 3 is a block diagram of a general embodiment of a layered iterative receiver with an iterative decoding (ID) process. Referring to Figure 3, the process begins (in the first iteration) with the joint demapping on a first group (layer 1) of bits by a demapper, DEMAP0 302, in response to an initial set of likelihood estimates 301. These initial estimates 301, which are technically priors as known to those skilled in the art, can be set assuming that bit values 0 and 1 are equally likely, i.e. log likelihood ratios "LLR_L initial" and "LLR_M initial" are set to zero. DEMAP0 302, and in fact DEMAP1 312 and DEMAP2 307, also require the received signal "Y" and channel state information estimates that are obtained from the receiver front end, as illustrated in Figure 2.

In one embodiment, DEMAP0 302 is a SOMA or adaptive SOMA. In an alternative embodiment, DEMAP0 302 is a MMSE decoder (i.e. MMSE estimation of the transmitted signal followed by likelihood ratio calculation), or a MaxlogMAP unit. In one embodiment, DEMAP0 302 can equivalently be DEMAP1 312 whereby the values of LLR_M and LLR_L are initialized to the initial log values of zero.

In a multi-stage scheme, DEMAP0 302 produces initial likelihood estimates for the layer 1 bits. In one embodiment, this is achieved in fact by a simplified demapping of layer 1 and layer 2 jointly, focusing mainly on the layer 1 bits, e.g. by considering each of layer 2 bits to have equal likelihood of being 0 or 1, i.e. log-likelihood of these bits are zero 0.

This demapping performed by DEMAP0 302 is followed by the outer decoding of layer 1 bits, using a layer 1 outer decoder, ODEC1 304, after appropriate deinterleaving, to order bits as determined in the transmission scheme by interleaver 105, is performed by deinterleaver 303. ODEC1 304 provides an update "LLR 1" 333 on the likelihood (soft bit) information on the coded layer 1 bits. It also provides likelihood (soft bit) information of the information stream in LLRi1 334.

Assuming a determination is made to have to iterate layer 1 (313), the soft bit information LLR1 333 from ODEC1 304 is then interleaved by interleaver 305 to produce LLR_M 331 which is fed into another joint demapper. This information is fed back to DEMAP1 312 for its next iteration. In addition, if required, LLR_M 331 is fed to DEMAP2 307, under control of control unit 351 (which in one embodiment controls a switch) for generating likelihood estimates for layer 2 bits. This information can be used by DEMAP2 307 on its first iteration. If it is not present on for DEMAP2 307 on its first iteration, then DEMAP2 307 can assume LLR_M 331 is simply LLR_M initial 301.

DEMAP2 307 performs joint demapping using the interleaved soft bit values and likelihood estimates for layer 1 bits as given by LLR_M 331. For the first operation of DEMAP2 307, values LLR_L 341 are not available. For this first operation, DEMAP2 307, can use the initial values "LLR_L initial" 301 as used by DEMAP0 302. It is also possible, though not shown in Figure 3, that DEMAP0 302 could provide some additional information to a better initial value of LLR_L for DEMAP2 307. In this sense, DEAMP0 302 can double as an initialization demapper for any layer, not just layer 1.

As with DEMAP0 302, in one embodiment of DEMAP2 307, the demapping is simplified, in this case by focusing on likelihoods for the layer 2 bits. This can be done by, for example, fixing the likelihoods of the layer 1 bits in a joint (layer 1 & 2) demapping process with simplifications as mentioned above.

DEMAP2 307 also optionally receives hard bit values 306 output from ODEC1 304 by mapping LLR_M 331 to hard bits. Such an operation can occur when the iteration processing on the first layer is terminated and layer 1 bits are considered known. Simplifications to the DEMAP2 307 by considering reduced constellations follow as mentioned before.

Note that DEMAP1 312 and DEMAP2 307 may also adapt their operation depending on the iteration. Each demapper can do so by internally keeping track of what iteration it is on. In such a case, such a demapper includes memory to store such information.

After DEMAP2 307 performs demapping, a layer 2 outer decoder ODEC2 309 performs the outer decoding of layer 2 bits, after appropriate deinterleaving by deinterleaver 308. ODEC2 309 generates an update on the likelihood (soft bit) information on the layer 2 bits.

Assuming a determination is made to perform an iteration of layer 2 (314), the soft bit information from ODEC2 309 is then interleaved by interleaver 310 to form likelihood LLR_L 341. If required at a particular iteration, this update information is fed into the joint demapper DEMAP1 312, under control of control unit 352 (which in one embodiment controls a switch), for layer 1 coded bits. This information can be used by DEMAP1 312 on its first iteration. If it is not present on for DEMAP1 312 on its first iteration, then DEMAP1 312 can assume LLR_L 341 is simply LLR_L initial 301. On subsequent operations of DEMAP1 312, the value of LLR_L that DEMAP1 312 uses can be kept to past known values until such time as an update is made.

This joint demapper DEMAP1 312 also uses the soft bit information LLR_M 331 from ODEC1 304. Note that DEMAP0 302 and DEMAP1 312 may be the same or different demappers, differing only on what input likelihood information is given to it for operation. The demapping operation performed by DEMAP1 312 can be simplified because this demapper focuses mainly of creating information only for layer 1 bits (as was the case of DEMAP0 302). Analogous to the process with DMAP2 307, DEMAP1 312 can do so by conversely fixing the soft bit information for layer 2 in the demapping process.

In a sequential dependent operation between the layers, in which layer 1 decoding only operates after an update from layer 2, and layer 2 decoding only operates after an update from layer 1, the process can then iterate between ODEC1 304, DEMAP2 307, ODEC2 309, DEMAP1 312, then back to ODCE1 304, and so on, using the respective interleavers/deinterleavers, thereby achieving efficient and low complexity BICM/ID with multistage decoding. The process can be made to terminate at any such time at which the final values LLR1 334 and LLRi2 344 are used to create final estimates of the information streams for layer 1 and layer 2. This is performed by mappers 315 and 316 that map decoded layer 1 information bit likelihoods LLRi1 and decoded layer 2 information bit likelihoods LLRi2, respectively, to bits.

In a more flexible mixed dependent and independent operation between layers, the respective demappers and outer decoders from each layer can be made to iterate without likelihood information updates from other layers. For example, DEMAP1 312 and ODEC1 304 could iterate a number of times without receiving updated values of LLR_L 341. Similarly layer 2 components can do the same. Also, one layer may terminate its iterations before the other layer.

In one embodiment, each demapper targets (mainly) the updating of likelihoods from only one of the two layers in Figure 3. The ability to do so comes from the fact that the outer decoders operate on different layers independently, and thus they can be used in an alternating fashion to update the likelihood on one layer to provide a new input for the demapper of another layer. The demappers, being SOMA, themselves produce soft information which enables the iteration and flow between outer decoders and demappers.

At different points in the iterative process the receiver may choose to terminate iterations on one or more layers, e.g. when it is determined that the layer can be correctly received. In one embodiment, this determination that the layer has been correctly received is performed via an additional Cyclic Redundancy Check (CRC) code within the layer. Use of a CRC code is known to those skilled in the art. Iterations can continue on other layers.

The demapppers (SOMA modules) themselves adapt in general during the iteration. In early iterations, where some likelihoods may be noisy, it may be beneficial to use larger "M" values at various steps in the algorithm. The value of M at each level in a "M" algorithm tree can vary between 1 and the total number of candidates that can be considered at that level in the tree. This upperbound "total" value grows exponentially with depth in the tree. As likelihoods become less noisy, in one embodiment, the SOMA algorithm fixes (or ignores updates to) the value of bits obtained from one layer while producing new likelihoods for another layer. That is, in one embodiment, only one of the two layers iterates after a given time. In this way, the tree defined in the SOMA search collapses at various branches allowing for lower complexity. The decision to do this, and the various "M" values, can adapt, or be pre-set before iterations start.

The SOMA can also be optionally replaced by other demappers adaptively at various iterations as either predetermined or determined by the quality of likelihood information at that iteration.

When only one layer iterates, some blocks become trivial. For example, if iterative decoding occurs on layer 2 bits (e.g., the LSB layer) iterates while iterative decoding terminates on layer 1 bits (e.g., the MSB layer), then ODEC1 304 does not operate, and DEMAP2 307 would use the optional hard bits from ODEC1 304, thereby simplifying DEMAP2 307. In other words, the receiver operates adaptively when one layer terminates its iteration, and the likelihoods for that layer can be converted to the "optional hard bit values" seen in Figure 3. Similarly, DEMAP1 312 would not be necessary in that case.

Note that the MIMO/OFDM joint demapper structure for DEMAP0, DEMAP1 and DEMAP2 in Figure 3, which operate for each tone in the OFDM system, may be those described in U.S. Patent document No. US2008285671, , entitled "Adaptive MaxlogMAP-type receiver structures," filed on May 15, 2008; U.S. Patent document No. US2009285323, entitled "Adaptive Soft Output M-algorithm Receiver Structures," filed on May 15, 2008; and Bursalioglu, et al., "Tree Position Adaptive Soft Output M-Algorithm Receiver Structures for MIMO/OFDM/QAM Systems with BICM/ID," US2009213954, filed February 25, 2008. These structures are the inner soft output decoders for the iterative decoding procedure for the BICM.

The relative bit error rates in the subchannels (parallel bitstreams) of the hierarchical multilevel/multistage systems can be moderated by changing the outer code rates or types, the outer code memories, the operation of the demappers, the decoder types, and/or by moving the signal points inside the hierarchical constellation. Figure 6 shows such a case for modified non-uniform 16-QAM for a 2 level scheme.

### Advantages of Embodiments of the Invention

One advantage of embodiments of the current invention is that it provides high performance decoding at high transmission rates. In particular, the ability of different layers to iterate, and to share update likelihood information, where such information is reliable, is critical at high rates. For example, in a non-iterative scheme layer 1 is decoded without any information, other than the prior "LLR_L initial" of layer 2. Even with information from layer 1, layer 2 performance can be severely limited by the low quality of information from layer 1 after only one iteration. At high rates, this can severely limit the performance of the decoding of layer 1, and therefore also the decoding of layer 2 which depends on layer 1 decoding in a non-iterative scheme. The flexibility to iterate each layer independently, and update likelihood information between layers as required, also allows the system to ensure that noise in likelihood estimates between layers is reduced.

Another advantage of embodiment of the current invention is they provide a multistage decoder, with an overall complexity that makes it implementable, even in an iterative decoding setting where complexity scales with the number of iterations. This is due to a number of factors, including the use simplified demappers which exploit the layered structure. This simplification can apply to many different demappers, though the SOMA used in the embodiment is itself is a reduced complexity algorithm. The SOMA for a multi-layer scheme can be further simplified beyond a single layer scheme.. As an example of complexity reduction, the use of MaxlogMAP decoders in a 6x6 64 QAM system has to contend with 2³⁶ possible sequences, while with 3 layers, each of 2 bits, each layer now has to contend with only 2¹² possible sequences. The SOMA-based tree search for this reduced set of possibilities is less complex than that of the non-layered version. Simplified adaptive SOMA decoders can be employed as component inner decoders since they only have to update likelihoods on some layers, not others.

For further complexity reduction, MMSE detection can be employed for some of the layers or iterations as hard bit decisions can be made on some layers as described before.

The layered scheme itself can be primarily used for complexity reduction, even given its inherent ability to also give unequal error protection (unequal quality of service) to layers.

### Other Adaptive Embodiments

In one embodiment, as described in further detail below, the SOMA is used adaptively when performing a detection search is adapted by each SOMA module (one per OFDM tone) according to the channel conditions (on the given OFDM tone) in order to optimize the overall complexity-performance trade-offs of the receiver. More specifically, during every inner/outer decoder iteration, a SOMA detector performs a SOMA detection process on each OFDM tone. In one embodiment, the number of candidates explored in the SOMA detection process is controlled by the parameter (M) that indicates the number of paths that are extended from each node or level in the detection tree. In particular, at any given level in the detection tree, only a subset M of the visited candidates are kept as survivors and are going to be extended at the next level. The rest of the candidates tested at this level are referred to as early-terminated paths. The early terminated paths are used by the SOMA for performing soft-output calculations. In one embodiment, the number of early terminated paths that are explored in the SOMA detection process is also an adaptation parameter as these paths also play a role in the soft output calculations. For purposes herein, this value is denoted T and is used in the soft output value calculation by the algorithm. In the overall detection process the number of inner/outer decoder iterations, I, also affects the total decoding complexity and the associated performance.

In one embodiment, the adaptive SOMA receivers can be additionally adapted in other ways as well (e.g., SOMA algorithms that have variable M in the tree and adapt the M, I, T parameters to the quality of the OFDM tones). One embodiment of the invention can be used independently or optionally be combined with those adaptation methods.

In another embodiment, the SOMA-based MIMO detection process is adapted based on the number of early-terminated paths in the tree (T), which are used in soft-output value calculations. In another embodiment, the SOMA-based MIMO detection process is adapted based on the number of iterations for each tone based on tone quality. In yet another embodiment, the SOMA-based MIMO detection process is adapted during each iteration and for every tone based on tone quality. In another embodiment, the SOMA-based MIMO detection process adapts one or more of the parameters, a number of early-terminated paths in the tree, and a total number of iterations based on tone quality.

In one embodiment, the different SOMA detectors are used for the different tones and are selected adaptively based on the quality of the tones. For a tone with good quality (high signal level, or high SNR), the M-value can be lowered and/or the T-value can be lowered and/or the I value can be lowered. The range of values for M and T vary as a function of number of transmit streams (number of transmit antennas) N, the size of the QAM constellation employed and the rate of the outer code in the system. As an example, based on experiments in 4 by 4 16 QAM MIMO, M=16 suffices to get near optimal performance. However, this value increases with increasing number of streams and QAM constellations. Typically, a (precomputed) lookup table can be employed that lists the value of M (and T) that should be used for set of SNR (or signal level) ranges. This approach yields lower relative complexity for that particular SOMA detector. On the other hand, for a tone (OFDM subchannel) of poor quality (low signal level or low SNR), higher values will be chosen for all or a subset of M and T and I. One approach for instance corresponds to setting a target performance in bit-error-rate at the mobile (this can be preset by the application). In this case, the higher the SNR on the tone, the lower the value of M needed to achieve the desired performance. As the SNR is reduced, the opposite effect takes place. However, there is an SNR level such that lowering the receive SNR beyond that value makes it impossible to achieve the desired performance at the mobile (no matter what the complexity). Beyond that level, either the maximum allowable value of M is used or the event is declared in outage. This leads to a higher value of complexity for this particular tone. The adaptive use of the SOMA and the number of iterations saves complexity without reduced performance. For the non-adaptive case the performance will, to a large extent, be dictated by the worst-quality tone, which corresponds to the highest relative complexity for the SOMA detectors.

In another embodiment, a metric correction term is applied for the soft output algorithm, much the same as the one used in the corrected SOVA algorithm. See, for example, Kitty Wong, "The Soft Output M-algorithm and its applications," PhD Thesis, Queens University, Kingston, Canada, August 2006.

In yet another embodiment, the mapper type is a set partition type mapper rather than a Gray mapper for the QAM constellations for iterative decoding.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

## Claims

1. A receiver for use in a wireless communication system that transmits multi-level coded data with a layered transmitter, wherein the receiver perform an iterative decoding scheme for the each of two or more information layers, the receiver comprising a layer 1 demapper (302) and a layer 1 outer decoder (304) to iteratively decode layer 1 of the coded data, and a layer 2 demapper (307) and a layer 2 outer decoder (309) to iteratively decode layer 2 of the coded data, **characterised in that**
the layer 1 demapper is adapted to generate a layer 1 set of likelihood estimates only for bits of the first information layer of received signal data in each of one or more iterations and where the layer 1 set of likelihood estimates are generated in response to the received signal data and, in at least one of the one or more iterations, also in response to one or more of the likelihood estimates generated by the outer decoders in decoding schemes for at least one layer other than layer 1;
the layer 1 outer decoder is adapted to update the layer 1 likelihood estimates from the layer 1 demapper and feedbacks the updated layer 1 likelihood estimates to the layer 1 demapper for use in another iteration of iterative decoding;
the layer 2 demapper is adapted to generate a layer 2 set of likelihood estimates only for information bits of the layer 2 of received signal data in each of one or more iterations, and where the layer 2 set of likelihood estimates are generated in response to the received signal data and, in at least one of the one or more iterations, also in response to one or more of the likelihood estimates generated by the outer decoders in decoding schemes for at least one layer other than layer 2; and
the layer 2 outer decoder is adapted to update the layer 2 likelihood estimates from the layer 2 demapper and to feedback the updated layer 2 likelihood estimates to one or both of the layer 2 demapper for use in another iteration of iterative decoding and to the layer 1 demapper to enable the layer 1 demapper to improve decoding of layer I coded data using layer 2 information.

2. The receiver defined in Claim 1 wherein an iteration between the layer 1 demapper and the layer 1 outer decoder occurs independently of the layer 2 demapper and layer 2 outer decoder and/or an iteration between the layer 2 demapper and the layer 2 outer decoder occurs independently of the layer 1 demapper and layer 1 outer decoder.

3. The receiver defined in Claim 1 wherein the first and second demappers (302, 307) comprise SOMA demappers.

4. The receiver defined in Claim 1 wherein the first demapper (3 02) and the first outer decoder (304) update the likelihoods of the first layer and the second demapper (307) and the second outer decoder (309) update the likelihoods of the second layer at alternating times during a time period.

5. The receiver defined in Claim 1 wherein the first demapper (302) is a SOMA demapper and further wherein the first SOMA demapper performs a joint demapping operation by setting each layer 2 bit to have equal likelihood of being 0 or 1.

6. The receiver defined in Claim 5 wherein the second demapper (307) is a SOMA demapper, and further wherein the second SOMA demapper performs a joint demapping operation by setting each layer 1 bit to have equal likelihood of being 0 or 1.

7. The receiver defined in Claim 1 further comprising:
a first deinterleaver (303) to perform deinterleaving on the first set of likelihood estimates prior to outer decoding by the first outer decoder; and
a second deinterleaver (308) to perform deinterleaving on the second set of likelihood estimates prior to outer decoding by the second outer decoder.

8. The receiver defined in Claim 7 further comprising:
a first interleaver (305) to perform interleaving on the updated second set of likelihood estimates prior to being feedback to at least one other demapper.

9. The receiver defined in Claim 8 wherein the at least one other demapper comprises the first demapper (302).

10. The receiver defined in Claim 8 wherein the at least one other demapper comprises a third demapper that is operable to generate a third set of likelihood estimates only for bits of the first layer and send the third set of likelihood estimates to the first outer decoder for updating as part of an iterative decoding process.

11. The receiver defined in Claim 10 further comprising:
a first interleaver (303) to perform interleaving on the updated second set of likelihood estimates prior to being feed to the third demapper.

12. The receiver defined in Claim 1 further comprising:
a first deinterleaver (303) to perform interleaving on likelihood estimates generated by the at least one other demapper;
a second deinterleaver (308) to perform interleaving on likelihood estimates generated by the second demapper; and
a mapper (315, 316) to map deinterleaved likelihoods estimates from the first and second deinterleavers to bits.

13. The receiver defined in Claim 1 wherein iterative decoding on the first and second layers only continues for one of the first and second layers after a period of time.

14. The receiver defined in Claim 13 wherein the first outer decoder (304) does not operate after the period of time if iterative decoding on the first layer terminates, and further wherein the second demapper (307) continues to perform iterative decoding using hard bits generated based on updated estimates from the first outer decoder.

15. The receiver defined in Claim 13 wherein the second outer decoder (309) does not operate after the period of time if iterative decoding on the second layer terminates, and further wherein the at least one other demapper continues to perform iterative decoding using hard bits generated based on updated estimates from the second outer decoder.

16. The receiver defined in Claim 1 wherein the second demapper (307) and one other demapper comprise SOMA demappers, that are adaptive on a per tone basis.

17. The receiver defined in Claim 1 wherein the first layer comprises the most significant bits and the second layer comprises the least significant bits.

18. The receiver defined in Claim 1 wherein the first layer comprises the core bits of a media and the second layer comprises enhancement bits of a media, the core bits being receivable at a lower signal-to-noise ratio than the enhancement bits.

19. The receiver defined in Claim 1 where the outer codes are binary, and the interleavers are binary.

20. A method for receiving and iteratively decoding multi-level coded data comprising a first and second information layers, **characterised by**:
generating a first set of likelihood estimates only for bits of the first layer of received signal data in one or more iterations using a first demapper (302), in response to, in at least one iteration likelihood information from an outer decoder from another layer;
updating the first set of likelihood estimates and feeding back the updated first set of likelihood estimates to the first demapper, using a first outer decoder (304), for another iteration of iterative decoding;
generating, using a second demapper (307), different than the first demapper, a second set of likelihood estimates only for bits in the second layer of received signal data in one or more iterations on the second layer, the second set of likelihood estimates being generated in response to the second layer of received signal data and, in at least one of the one or more iterations, the updated first set of likelihood estimates generated by the first outer decoder in at least one of the one or more iterations on the first layer; and
updating the second set of likelihood estimates and feeding back the updated second set of likelihood estimates to one of the second demapper or the first demapper, using a second outer decoder (309), for another iteration of iterative decoding, the updated second set of likelihood estimates being used by the first demapper to improve decoding of the first layer.

21. The method defined in Claim 20 wherein an iteration between the first demapper (302) and the first outer decoder (304) occurs independently of the second demapper (307) and second outer decoder (309) and/or an iteration between the second demapper and the second outer decoder occurs independently of the first demapper and first outer decoder.

22. The method defined in Claim 20 wherein the first and second demappers (302, 307) comprise SOMA demappers.

23. The method defined in Claim 20 wherein updating the likelihoods of the first layer is performed by the first demapper (302) and updating the likelihoods of the second layer using the second demapper (307) and the second outer decoder (309) at alternating times during a time period.

24. The method defined in Claim 20 wherein the first demapper (307) is a SOMA demapper and further comprising performing a joint demapping operation using the first SOMA demapper by setting each layer 2 bit to have equal likelihood of being 0 or 1.

25. The method defined in Claim 24 wherein the second demapper (307) is a SOMA demapper, and further comprising performing a joint demapping operation using the second SOMA demapper by setting each layer 1 bit to have equal likelihood of being 0 or 1.

## Patentansprüche

1. Empfänger zur Verwendung in einem drahtlosen Kommunikationssystem, das Multilevel-codierte Daten mit einem mehrschichtigen Sender sendet, wobei der Empfänger ein iteratives Decodierschema für jede von zwei oder mehr Informationsschichten ausführt, wobei der Empfänger einen Schicht-1-Demapper (302) und einen äußeren Schicht-1-Decoder (304) zum iterativen Decodieren von Schicht 1 der codierten Daten sowie einen Schicht-2-Demapper (307) und einen äußeren Schicht-2-Decoder (309) zum iterativen Decodieren von Schicht 2 der codierten Daten umfasst, **dadurch gekennzeichnet, dass**
der Schicht-1-Demapper so ausgelegt ist, dass er einen Schicht-1-Satz von Wahrscheinlichkeitsschätzungen nur für Bits der ersten Informationsschicht von empfangenen Signaldaten in jeder von einer oder mehreren Iterationen erzeugt, und wobei der Schicht-1-Satz von Wahrscheinlichkeitsschätzungen als Reaktion auf die empfangenen Signaldaten und, in wenigstens einer der ein oder mehreren Iterationen, auch als Reaktion auf eine oder mehrere der Wahrscheinlichkeitsschätzungen erzeugt wird, die von den äußeren Decodern in Decodierschemas für wenigstens eine andere Schicht als Schicht 1 erzeugt werden;
der äußere Schicht-1-Decoder so ausgelegt ist, dass er die Schicht-1-Wahrscheinlichkeitsschätzungen vom Schicht-1-Demapper aktualisiert und die aktualisierten Schicht-1-Wahrscheinlichkeitsschätzungen zum Schicht-1-Demapper zur Verwendung in einer anderen Iteration von iterativer Decodierung zurückmeldet;
der Schicht-2-Demapper so ausgelegt ist, dass er einen Schicht-2-Satz von Wahrscheinlichkeitsschätzungen nur für Informationsbits der Schicht 2 von empfangenen Signaldaten in jeder von einer oder mehreren Iterationen erzeugt, und wobei der Schicht-2-Satz von Wahrscheinlichkeitsschätzungen als Reaktion auf die empfangenen Signaldaten und, in wenigstens einer der ein oder mehreren Iterationen, auch als Reaktion auf eine oder mehrere Wahrscheinlichkeitsschätzungen erzeugt wird, die von den äußeren Decodern in Decodierschemas für wenigstens eine andere Schicht als Schicht 2 erzeugt werden; und
der äußere Schicht-2-Decoder so ausgelegt ist, dass er die Schicht-2-Wahrscheinlichkeitsschätzungen vom Schicht-2-Demapper aktualisiert und die aktualisierten Schicht-2-Wahrscheinlichkeitsschätzungen zu einem oder beiden der Schicht-2-Demapper zur Verwendung in einer anderen Iteration von iterativer Decodierung und zum Schicht-1-Demapper zurückmeldet, um es dem Schicht-1-Demapper zu ermöglichen, die Decodierung von Schicht-1-codierten Daten mittels Schicht-2-Informationen zu verbessern.

2. Empfänger nach Anspruch 1, wobei eine Iteration zwischen dem Schicht-1-Demapper und dem äußeren Schicht-1-Decoder unabhängig von dem Schicht-2-Demapper und dem äußeren Schicht-2-Decoder erfolgt und/oder eine Iteration zwischen dem Schicht-2-Demapper und dem äußeren Schicht-2-Decoder unabhängig von dem Schicht-1-Demapper und dem äußeren Schicht-1-Decoder erfolgt.

3. Empfänger nach Anspruch 1, wobei der erste und zweite Demapper (302, 307) SOMA-Demapper umfassen.

4. Empfänger nach Anspruch 1, wobei der erste Demapper (302) und der erste äußere Decoder (304) die Wahrscheinlichkeiten der ersten Schicht aktualisieren und der zweite Demapper (307) und der zweite äußere Decoder (309) die Wahrscheinlichkeiten der zweiten Schicht zu abwechselnden Zeiten während einer Zeitperiode aktualisieren.

5. Empfänger nach Anspruch 1, wobei der erste Demapper (302) ein SOMA-Demapper ist und wobei ferner der erste SOMA-Demapper einen gemeinsamen Demapping-Vorgang durch Setzen jedes Schicht-2-Bits so ausführt, dass es die gleiche Wahrscheinlichkeit hat, 0 oder 1 zu sein.

6. Empfänger nach Anspruch 5, wobei der zweite Demapper (307) ein SOMA-Demapper ist und wobei ferner der zweite SOMA-Demapper einen gemeinsamen Demapping-Vorgang durch Setzen jedes Schicht-1-Bits so ausführt, dass es die gleiche Wahrscheinlichkeit hat, 0 oder 1 zu sein.

7. Empfänger nach Anspruch 1, der ferner Folgendes umfasst:
einen ersten Entschachteler (303) zum Ausführen von Entschachtelung an dem ersten Satz von Wahrscheinlichkeitsschätzungen vor der äußeren Decodierung durch den ersten äußeren Decoder; und
einen zweiten Entschachteler (308) zum Ausführen von Entschachtelung an dem zweiten Satz von Wahrscheinlichkeitsschätzungen vor der äußeren Decodierung durch den zweiten äußeren Decoder.

8. Empfänger nach Anspruch 7, der ferner Folgendes umfasst:
einen ersten Verschachteler (305) zum Ausführen von Verschachtelung an dem aktualisierten zweiten Satz von Wahrscheinlichkeitsschätzungen vor der Rückmeldung an wenigstens einen anderen Demapper.

9. Empfänger nach Anspruch 8, wobei der wenigstens eine andere Demapper den ersten Demapper (302) umfasst.

10. Empfänger nach Anspruch 8, wobei der wenigstens eine andere Demapper einen dritten Demapper umfasst, dessen Aufgabe es ist, einen dritten Satz von Wahrscheinlichkeitsschätzungen nur für Bits der ersten Schicht zu erzeugen und den dritten Satz von Wahrscheinlichkeitsschätzungen zum ersten äußeren Decoder zur Aktualisierung als Teil eines iterativen Decodierprozesses zu senden.

11. Empfänger nach Anspruch 10, der ferner Folgendes umfasst:
einen ersten Verschachteler (303) zum Ausführen von Verschachtelung an dem aktualisierten zweiten Satz von Wahrscheinlichkeitsschätzungen vor dem Zuführen zum dritten Demapper.

12. Empfänger nach Anspruch 1, der ferner Folgendes umfasst:
einen ersten Entschachteler (303) zum Ausführen von Verschachtelung an Wahrscheinlichkeitsschätzungen, die von dem wenigstens einen anderen Demapper erzeugt werden;
einen zweiten Entschachteler (308) zum Ausführen von Verschachtelung an Wahrscheinlichkeitsschätzungen, die vom zweiten Demapper erzeugt werden; und
einen Mapper (315, 316) zum Mappen von entschachtelten Wahrscheinlichkeitsschätzungen vom ersten und zweiten Entschachteler zu Bits.

13. Empfänger nach Anspruch 1, wobei iteratives Decodieren an der ersten und zweiten Schicht nur für eine der ersten und zweiten Schichten nach einer Zeitperiode fortgesetzt wird.

14. Empfänger nach Anspruch 13, wobei der erste äußere Decoder (304) nach der Zeitperiode nicht arbeitet, wenn iteratives Decodieren an der ersten Schicht endet, und wobei ferner der zweite Demapper (307) iteratives Decodieren mit harten Bits weiter durchführt, die auf der Basis von aktualisierten Schätzungen vom ersten äußeren Decoder erzeugt werden.

15. Empfänger nach Anspruch 13, wobei der zweite äußere Decoder (309) nach der Zeitperiode nicht arbeitet, wenn iteratives Decodieren an der zweiten Schicht endet, und wobei ferner der wenigstens eine andere Demapper iteratives Decodieren mit harten Bits weiter ausführt, die auf der Basis von aktualisierten Schätzungen vom zweiten äußeren Decoder erzeugt werden.

16. Empfänger nach Anspruch 1, wobei der zweite Demapper (307) und ein anderer Demapper SOMA-Demapper umfassen, die auf einer Pro-Ton-Basis adaptiv sind.

17. Empfänger nach Anspruch 1, wobei die erste Schicht die höchstwertigen Bits umfasst und die zweite Schicht die niedrigstwertigen Bits umfasst.

18. Empfänger nach Anspruch 1, wobei die erste Schicht die Kernbits eines Mediums umfasst und die zweite Schicht Erweiterungsbits eines Mediums umfasst, wobei die Kernbits mit einem niedrigeren Signal-Rausch-Verhältnis empfangen werden können als die Erweiterungsbits.

19. Empfänger nach Anspruch 1, wobei die äußeren Codes binär sind und die Verschachteler binär sind.

20. Verfahren zum Empfangen und iterativen Decodieren von Multilevel-codierten Daten, die eine erste und eine zweite Informationsschicht umfassen, **gekennzeichnet durch**:
Erzeugen eines ersten Satzes von Wahrscheinlichkeitsschätzungen nur für Bits der ersten Schicht von empfangenen Signaldaten in einer oder mehreren Iterationen mit einem ersten Demapper (302) als Reaktion auf, in wenigstens einer Iteration, Wahrscheinlichkeitsinformation von einem äußeren Decoder von einer anderen Schicht;
Aktualisieren des ersten Satzes von Wahrscheinlichkeitsschätzungen und Zurückmelden des aktualisierten ersten Satzes von Wahrscheinlichkeitsschätzungen an den ersten Demapper, mittels eines ersten äußeren Decoders (304), für eine andere Iteration von iterativer Decodierung;
Erzeugen, mittels eines zweiten Demappers (307), der sich von dem ersten Demapper unterscheidet, eines zweiten Satzes von Wahrscheinlichkeitsschätzungen nur für Bits in der zweiten Schicht von empfangenen Signaldaten in einer oder mehreren Iterationen auf der zweiten Schicht, wobei der zweite Satz von Wahrscheinlichkeitsschätzungen als Reaktion auf die zweite Schicht von empfangenen Signaldaten und, in wenigstens einer der ein oder mehreren Iterationen, den aktualisierten ersten Satz von Wahrscheinlichkeitsschätzungen erzeugt wird, die vom ersten äußeren Decoder in wenigstens einer der ein oder mehreren Iterationen auf der ersten Schicht erzeugt wurden; und
Aktualisieren des zweiten Satzes von Wahrscheinlichkeitsschätzungen und Zurückmelden des aktualisierten zweiten Satzes von Wahrscheinlichkeitsschätzungen an den zweiten Demapper oder den ersten Demapper mittels eines zweiten äußeren Decoders (309), für eine andere Iteration von iterativer Decodierung, wobei der aktualisierte zweite Satz von Wahrscheinlichkeitsschätzungen vom ersten Demapper zum Verbessern von Decodierung der ersten Schicht benutzt wird.

21. Verfahren nach Anspruch 20, wobei eine Iteration zwischen dem ersten Demapper (302) und dem ersten äußeren Decoder (304) unabhängig von dem zweiten Demapper (307) und dem zweiten äußeren Decoder (309) erfolgt und/oder eine Iteration zwischen dem zweiten Demapper und dem zweiten äußeren Decoder unabhängig von dem ersten Demapper und dem ersten äußeren Decoder erfolgt.

22. Verfahren nach Anspruch 20, wobei der erste und der zweite Demapper (302, 307) SOMA-Demapper umfassen.

23. Verfahren nach Anspruch 20, wobei das Aktualisieren der Wahrscheinlichkeiten der ersten Schicht vom ersten Demapper (302) ausgeführt wird und das Aktualisieren der Wahrscheinlichkeiten der zweiten Schicht mittels des zweiten Demappers (307) und des zweiten äußeren Decoders (309) zu abwechselnden Zeiten während einer Zeitperiode ausgeführt wird.

24. Verfahren nach Anspruch 20, wobei der erste Demapper (307) ein SOMA-Demapper ist und ferner das Ausführen eines gemeinsamen Demapping-Vorgangs mittels des ersten SOMA-Demappers durch Setzen jedes Schicht-2-Bits so beinhaltet, dass es die gleiche Wahrscheinlichkeit hat, 0 oder 1 zu sein.

25. Verfahren nach Anspruch 24, wobei der zweite Demapper (307) ein SOMA-Demapper ist, und das ferner das Ausführen eines gemeinsamen Demapping-Vorgangs mittels des zweiten SOMA-Demappers durch Setzen jedes Schicht-1-Bits so beinhaltet, dass es die gleiche Wahrscheinlichkeit hat, 0 oder 1 zu sein.

## Revendications

1. Un récepteur destiné à une utilisation dans un système de communication sans fil qui transmet des données codées à plusieurs niveaux avec un émetteur à couches, où le récepteur exécute un mécanisme de décodage itératif pour chacune des deux ou plus couches d'informations, le récepteur comprenant un démappeur de couche 1 (302) et un décodeur extérieur de couche 1 (304) destinés à décoder de manière itérative la couche 1 des données codées, et un démappeur de couche 2 (307) et un décodeur extérieur de couche 2 (309) destinés à décoder de manière itérative la couche 2 des données codées, **caractérisé en ce que**
le démappeur de couche 1 est adapté de façon à générer un ensemble de couche 1 d'estimations de probabilité uniquement pour des bits de la première couche d'informations de données de signal reçues dans chaque itération d'une ou de plusieurs itérations et où l'ensemble de couche 1 d'estimations de probabilité est généré en réponse aux données de signal reçues et, dans au moins une des unes ou plusieurs itérations, également en réponse à une ou plusieurs des estimations de probabilité générées par les décodeurs extérieurs dans des mécanismes de décodage pour au moins une couche autre que la couche 1,
le décodeur extérieur de couche 1 est adapté de façon à actualiser les estimations de probabilité de couche 1 provenant du démappeur de couche 1 et envoie en retour les estimations de probabilité de couche 1 actualisées au démappeur de couche 1 destinées à une utilisation dans une autre itération d'un décodage itératif,
le démappeur de couche 2 est adapté de façon à générer un ensemble de couche 2 d'estimations de probabilité uniquement pour des bits d'information de la couche 2 de données de signal reçues dans chaque itération d'une ou de plusieurs itérations, et où l'ensemble de couche 2 d'estimations de probabilité est généré en réponse aux données de signal reçues et, dans au moins une des unes ou plusieurs itérations, également en réponse à une ou plusieurs des estimations de probabilité générées par les décodeurs extérieurs dans des mécanismes de décodage pour au moins une couche autre que la couche 2, et
le décodeur extérieur de couche 2 est adapté de façon à actualiser les estimations de probabilité de couche 2 provenant du démappeur de couche 2 et à envoyer en retour les estimations de probabilité de couche 2 actualisées vers un ou les deux démappeurs de couche 2 pour une utilisation dans une autre itération d'un décodage itératif et au démappeur de couche 1 de façon à permettre au démappeur de couche 1 d'améliorer le décodage de données codées de couche 1 au moyen d'informations de couche 2.

2. Le récepteur selon la Revendication 1 où une itération entre le démappeur de couche 1 et le décodeur extérieur de couche 1 se produit indépendamment du démappeur de couche 2 et du décodeur extérieur de couche 2 et/ou une itération entre le démappeur de couche 2 et le décodeur extérieur de couche 2 se produit indépendamment du démappeur de couche 1 et du décodeur extérieur de couche 1.

3. Le récepteur selon la Revendication 1 où les premier et deuxième démappeurs (302, 307) comprennent des démappeurs SOMA.

4. Le récepteur selon la Revendication 1 où le premier démappeur (302) et le premier décodeur extérieur (304) actualisent les probabilités de la première couche et le deuxième démappeur (307) et le deuxième décodeur extérieur (309) actualisent les probabilités de la deuxième couche à des instants alternés au cours d'une période temporelle.

5. Le récepteur selon la Revendication 1 où le premier démappeur (302) est un démappeur SOMA et où en outre le premier démappeur SOMA exécute une opération de démappage conjointe en réglant chaque bit de couche 2 de façon à avoir une probabilité égale d'être 0 ou 1.

6. Le récepteur selon la Revendication 5 où le deuxième démappeur (307) est un démappeur SOMA, et où en outre le deuxième démappeur SOMA exécute une opération de démappage conjointe en réglant chaque bit de couche 1 de façon à avoir une probabilité égale d'être 0 ou 1.

7. Le récepteur selon la Revendication 1 comprenant en outre :
un premier désentrelaceur (303) destiné à exécuter un désentrelacement sur le premier ensemble d'estimations de probabilité avant un décodage extérieur par le premier décodeur extérieur, et
un deuxième désentrelaceur (308) destiné à exécuter un désentrelacement sur le deuxième ensemble d'estimations de probabilité avant un décodage extérieur par le deuxième décodeur extérieur.

8. Le récepteur selon la Revendication 7 comprenant en outre :
un premier entrelaceur (305) destiné à exécuter un entrelacement sur le deuxième ensemble actualisé d'estimations de probabilité avant d'être envoyé en retour vers au moins un autre démappeur.

9. Le récepteur selon la Revendication 8 où le au moins un autre démappeur comprend le premier démappeur (302).

10. Le récepteur selon la Revendication 8 où le au moins un autre démappeur comprend un troisième démappeur qui est conçu de façon à générer un troisième ensemble d'estimations de probabilité uniquement pour des bits de la première couche et à envoyer le troisième ensemble d'estimations de probabilité au premier décodeur extérieur pour une actualisation en tant que partie d'un processus de décodage itératif.

11. Le récepteur selon la Revendication 10 comprenant en outre :
un premier entrelaceur (303) destiné à exécuter un entrelacement sur le deuxième ensemble actualisé d'estimations de probabilité avant d'être envoyé au troisième démappeur.

12. Le récepteur selon la Revendication 1 comprenant en outre :
un premier désentrelaceur (303) destiné à exécuter un entrelacement sur des estimations de probabilité générées par le au moins un autre démappeur,
un deuxième désentrelaceur (308) destiné à exécuter un entrelacement sur des estimations de probabilité générées par le deuxième démappeur, et
un mappeur (315, 316) destiné à mapper des estimations de probabilité désentrelacées provenant des premier et deuxième désentrelaceurs vers des bits.

13. Le récepteur selon la Revendication 1 où un décodage itératif sur les première et deuxième couches uniquement se poursuit pour une couche parmi la première et la deuxième couches après une période temporelle.

14. Le récepteur selon la Revendication 13 où le premier décodeur extérieur (304) ne fonctionne pas après la période temporelle si un décodage itératif sur la première couche se termine, et où en outre le deuxième démappeur (307) poursuit l'exécution d'un décodage itératif au moyen de bits fixes générés en fonction d'estimations actualisées provenant du premier décodeur extérieur.

15. Le récepteur selon la Revendication 13 où le deuxième décodeur extérieur (309) ne fonctionne pas après la période temporelle si un décodage itératif sur la deuxième couche se termine, et où en outre le au moins un autre démappeur continue à exécuter un décodage itératif au moyen de bits fixes générés en fonction d'estimations actualisées provenant du deuxième décodeur extérieur.

16. Le récepteur selon la Revendication 1 où le deuxième démappeur (307) et un autre démappeur comprennent des démappeurs SOMA, qui sont adaptatifs sur une base par tonalité.

17. Le récepteur selon la Revendication 1 où la première couche comprend les bits les plus significatifs et la deuxième couche comprend les bits les moins significatifs.

18. Le récepteur selon la Revendication 1 où la première couche comprend les bits noyaux d'un support et la deuxième couche comprend des bits d'amélioration d'un support, les bits noyaux pouvant être reçus à un rapport signal sur bruit plus faible que les bits d'amélioration.

19. Le récepteur selon la Revendication 1 où les codes extérieurs sont binaires et les entrelaceurs sont binaires.

20. Un procédé de réception et de décodage itératif de données codées à plusieurs niveaux comprenant une première et une deuxième couches d'informations, **caractérisé par** :
la génération d'un premier ensemble d'estimations de probabilité uniquement pour des bits de la première couche de données de signal reçues dans une ou plusieurs itérations au moyen d'un premier démappeur (302), en réponse à, dans au moins une itération, une information de probabilité provenant d'un décodeur extérieur provenant d'une autre couche,
l'actualisation du premier ensemble d'estimations de probabilité et l'envoi en retour du premier ensemble actualisé d'estimations de probabilité au premier démappeur, au moyen d'un premier décodeur extérieur (304), pour une autre itération d'un décodage itératif,
la génération, au moyen d'un deuxième démappeur (307), différent du premier démappeur, d'un deuxième ensemble d'estimations de probabilité uniquement pour les bits dans la deuxième couche de données de signal reçues dans une ou plusieurs itérations sur la deuxième couche, le deuxième ensemble d'estimations de probabilité étant généré en réponse à la deuxième couche de données de signal reçues et, dans au moins une des unes ou plusieurs itérations, le premier ensemble actualisé d'estimations de probabilité généré par le premier décodeur extérieur dans au moins une des unes ou plusieurs itérations sur la première couche, et
l'actualisation du deuxième ensemble d'estimations de probabilité et l'envoi en retour du deuxième ensemble actualisé d'estimations de probabilité vers un démappeur parmi le deuxième démappeur ou le premier démappeur, au moyen d'un deuxième décodeur extérieur (309), pour une autre itération d'un décodage itératif, le deuxième ensemble actualisé d'estimations de probabilité étant utilisé par le premier démappeur de façon à améliorer un décodage de la première couche.

21. Le procédé selon la Revendication 20 où une itération entre le premier démappeur (302) et le premier décodeur extérieur (304) se produit indépendamment du deuxième démappeur (307) et du deuxième décodeur extérieur (309) et/ou une itération entre le deuxième démappeur et le deuxième décodeur extérieur se produit indépendamment du premier démappeur et du premier décodeur extérieur.

22. Le procédé selon la Revendication 20 où les premier et deuxième démappeurs (302, 307) comprennent des démappeurs SOMA.

23. Le procédé selon la Revendication 20 où l'actualisation des probabilités de la première couche est exécutée par le premier démappeur (302) et l'actualisation des probabilités de la deuxième couche au moyen du deuxième démappeur (307) et du deuxième décodeur extérieur (309) à des instants alternés au cours d'une période temporelle.

24. Le procédé selon la Revendication 20 où le premier démappeur (307) est un démappeur SOMA et comprend en outre l'exécution d'une opération de démappage conjointe au moyen du premier démappeur SOMA en réglant chaque bit de couche 2 de façon à avoir une probabilité égale d'être 0 ou 1.

25. Le procédé selon la Revendication 24 où le deuxième démappeur (307) est un démappeur SOMA et comprend en outre l'exécution d'une opération de démappage conjointe au moyen du deuxième démappeur SOMA en réglant chaque bit de couche 1 de façon à avoir une probabilité égale d'être 0 ou 1.
